# EUROPEAN PATENT SPECIFICATION

(11) **EP 4 176 633 B1**
(45) Date of publication and mention of the grant of the patent: **01.10.2025**
(21) Application number: 20948376.7
(22) Date of filing: 03.08.2020
(51) Int. Cl.: H04W 48/18

(54) **CELL CONFIGURATION SCHEMES IN WIRELESS COMMUNICATIONS**
ZELLKONFIGURATIONSSCHEMATA IN DER DRAHTLOSEN KOMMUNIKATION
SCHÉMAS DE CONFIGURATION DE CELLULE DANS DES COMMUNICATIONS SANS FIL

(43) Date of publication of application: 10.05.2023
(73) Proprietor: ZTE Corporation, Shenzhen, Guangdong 518057 (CN)
(72) Inventor: GAO, Yuan, Shenzhen, Guangdong 518057 (CN); HUANG, He, Shenzhen, Guangdong 518057 (CN)
(74) Representative: Vossius & Partner Patentanwälte Rechtsanwälte mbB
(86) International application number: PCT/CN2020/106525
(87) International publication number: WO 2022/027166

(56) References cited:
- CN-A- 109 246 775
- CN-A- 109 743 213
- CN-A- 111 148 187
- CN-A- 111 149 387
- US-A1- 2019 174 554
- US-A1- 2020 022 095
- US-A1- 2022 400 421

## Description

### TECHNICAL FIELD

This patent document generally relates to systems, devices, and techniques for wireless communications.

### BACKGROUND

Wireless communication technologies are moving the world toward an increasingly connected and networked society. The rapid growth of wireless communications and advances in technology has led to greater demand for capacity and connectivity. Other aspects, such as energy consumption, device cost, spectral efficiency, and latency are also important to meeting the needs of various communication scenarios. In comparison with the existing wireless networks, next generation systems and wireless communication techniques need to provide support for an increased number of users and devices.

CN 111149387 A and US 2022/400421 A1 relate to a cell reselection method and device, and communication equipment.

### SUMMARY

The invention is specified by the independent claims. Preferred embodiments are defined in the dependent claims. The following aspects and implementation clauses in this section are provided for a better understanding of the invention which is solely defined by the appended claims. In the following description, although numerous features may be designated as optional, it is nevertheless acknowledged that all features comprised in the independent claims are not to be read as optional.

This document relates to methods, systems, and devices for control information configuration in wireless communications.

In one aspect, a wireless communication method is disclosed. The wireless communication method is provided to include receiving, by a user device, from a network, one or more sets of configuration information for a cell selection or a cell reselection and association information indicating one or more network slices or network slice groups associated with the one or more sets of the configuration information; and performing, by the user device, the cell selection or the cell reselection based on a final configuration information that is one of the one or more sets of the configuration information.

In another aspect, a wireless communication method is disclosed. The wireless communication method includes transmitting, by a network device, to a user device, one or more sets of configuration information for a cell selection or a cell reselection and association information indicating one or more network slices or network slice groups associated with the one or more sets of the configuration information.

In another aspect, a wireless communication apparatus comprising a processor configured to perform the disclosed methods is disclosed.

In another aspect, a computer readable medium having code stored thereon is disclosed. The code, when implemented by a processor, causes the processor to implement a method described in the present document.

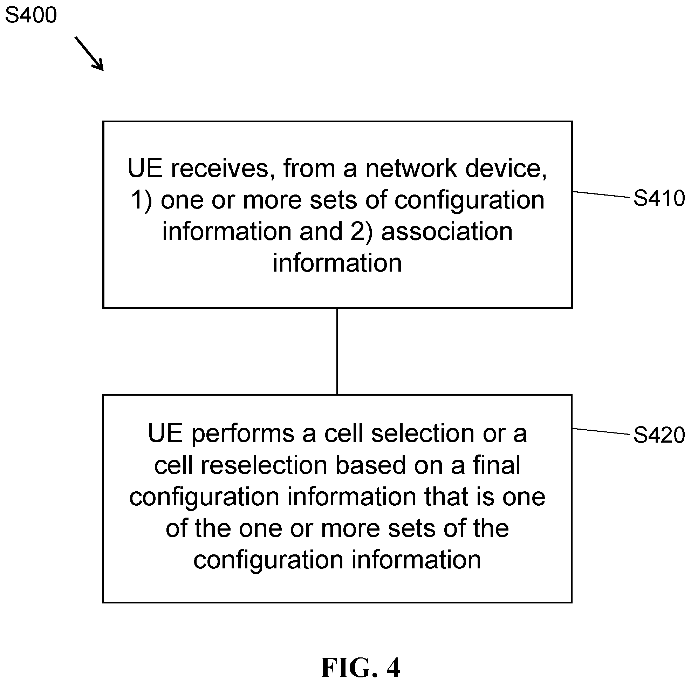

These, and other features, are described in the present document. In the following, the invention is best understood in view of Figure 4. The remaining embodiments, aspects, or examples are included in order to help the reader better understand the invention.

### BRIEF DESCRIPTION OF THE DRAWING

FIG. 1 shows a conventional cell configuration process.
FIG. 2 shows an example of wireless communication including a base station (BS) and user equipment (UE) based on some implementations of the disclosed technology.
FIG. 3 shows an example of a block diagram of a portion of an apparatus based on some implementations of the disclosed technology.
FIG. 4 shows an example of a flowchart showing operations of a UE based on the present invention.
FIG. 5 shows an example of a flowchart showing operations between a UE and a gNB based on some implementations of the disclosed technology.
FIG. 6 shows an example of a flowchart showing operations between a UE, a gNB, and a core network based on some implementations of the disclosed technology.
FIG. 7 shows an example of a flowchart showing operations between a UE, a gNB node, and a core network based on some implementations of the disclosed technology.
FIG. 8 shows an example of a flowchart showing operations between a UE, a gNB node, and a core network based on some implementations of the disclosed technology.
FIG. 9 shows an example of a flowchart showing operations of a network based on some implementations of the disclosed technology.

### DETAILED DESCRIPTION

The disclosed technology provides implementations and examples of cell configuration schemes in wireless communications. While 5G terminology is used in some cases to facilitate understanding of the disclosed techniques, which may be applied to wireless systems and devices that use communication protocols other than 5G or 3GPP protocols.

Network Slicing has been introduced in New Radio (NR), which is a concept to allow differentiated treatment depending on requirements for each customer. With slicing, it is possible for Mobile Network Operators (MNO) to consider customers as belonging to different tenant types with each having different service requirements that govern in terms of what slice types each tenant is eligible to use based on Service Level Agreement (SLA) and subscriptions.

Each network slice is uniquely identified by a single-network slice selection assistance information (S-NSSAI). The network slice selection assistance information (NSSAI) includes one or a list of S-NSSAIs (Single NSSAI) where a S-NSSAI is a combination of followings:
- mandatory SST (Slice/Service Type) field, which identifies the slice type and consists of 8 bits (with range is 0-255);
- optional SD (Slice Differentiator) field, which differentiates among Slices with same SST field and consist of 24 bits.

The standardized SST values are shown in the table below.

**Table 1 - Standardized SST values**

| **Slice/Service type** | **SST value** | **Characteristics** |
|---|---|---|
| eMBB | 1 | Slice suitable for the handling of 5G enhanced Mobile Broadband. |
| URLLC | 2 | Slice suitable for the handling of ultra- reliable low latency communications. |
| MIoT | 3 | Slice suitable for the handling of massive IoT. |
| V2X | 4 | Slice suitable for the handling of V2X services. |

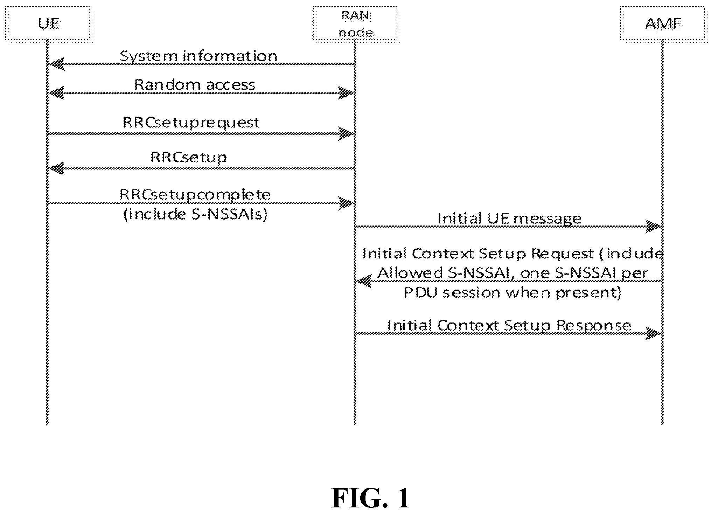

FIG. 1 shows a conventional cell configuration process. As shown in FIG. 1, no slice specific information is provided in system information. The user equipment (UE) perform cell selection and reselection without considering the slice information. After UE selects a cell, the UE initiate random access and sets up the RRC connection. The UE will provide the S-NSSAIs to the RAN node to help the RAN node to select an appropriate AMF. Following the initial access that allows the establishment of the RRC connection and the selection of the correct AMF, the AMF establishes the complete UE context by sending the Initial Context Setup Request message to the NG-RAN over NG-C. The message contains the allowed NSSAI and additionally contains the S-NSSAI(s) as part of the PDU session(s) resource description when present in the message. Upon successful establishment of the UE context and allocation of PDU session resources to the relevant network slice(s), the NG-RAN responds with the Initial Context Setup Response message. One S-NSSAI is added per PDU session to be established, so NG-RAN is enabled to apply policies at PDU session level according to the SLA represented by the network slice, while still being able to apply (for example) differentiated QoS within the slice.

The cell selection/reselection priority is configured per cell or per UE in the Uu interface and UE is not aware of the supported slice of the candidate reselection target cells. Thus, the UE perform cell selection and reselection without taking the slice information into consideration. As a result, the UE may select and initiate random access to a cell which belongs to an inappropriate slice which is not preferred by network (NW) for the UE and may get rejected several times before finding the most appropriate cell. In recognition of this issues, various implementations of the disclosed technology are provided to assist the UE to select a cell supporting the intended slice during the cell reselection procedure.

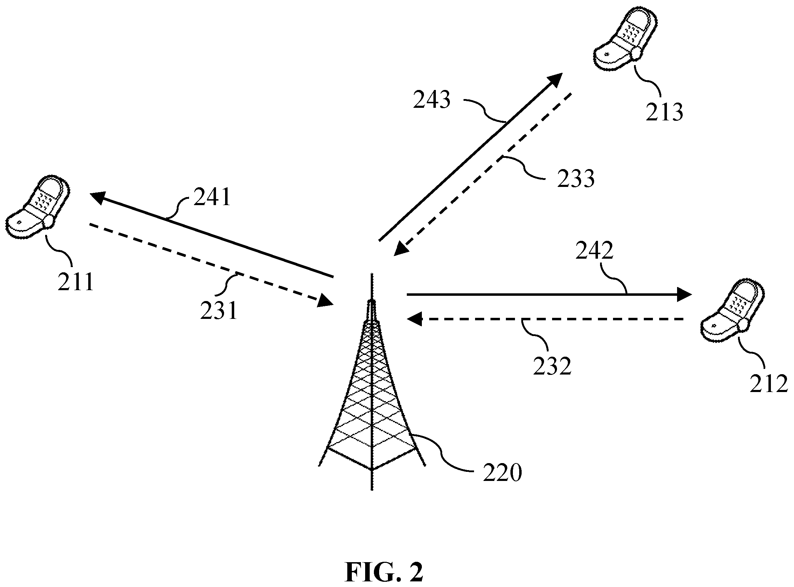

The various implementations of the disclosed technology are provided in a wireless communication system. FIG. 2 shows an example of a wireless communication system (e.g., a 5G or NR cellular network) that includes a BS 220 and one or more user equipment (UE) 211, 212 and 113. In some embodiments, the UEs access the BS (e.g., the network) using implementations of the disclosed technology (231, 232, 233), which then enables subsequent communication (241, 242, 243) from the BS to the UEs. The UE may be, for example, a smartphone, a tablet, a mobile computer, a machine to machine (M2M) device, an Internet of Things (IoT) device, and so on.

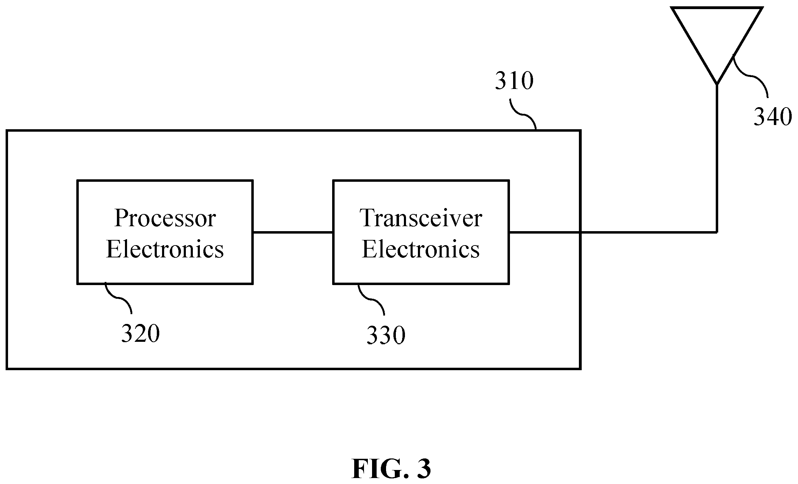

FIG. 3 shows an example of a block diagram representation of a portion of an apparatus. An apparatus 310 such as a base station or a network device, a user device or a wireless device (or UE) can include processor electronics 320 such as a microprocessor that implements one or more of the techniques presented in this document. The apparatus 310 can include transceiver electronics 330 to send and/or receive wireless signals over one or more communication interfaces such as antenna 340. The apparatus 310 can include other communication interfaces for transmitting and receiving data. The apparatus 310 can include one or more memories (not explicitly shown) configured to store information such as data and/or instructions. In some implementations, the processor electronics 320 can include at least a portion of transceiver electronics 330. In some embodiments, at least some of the disclosed techniques, modules or functions are implemented using the apparatus 310.

FIG. 4 shows an example of a flowchart showing operations of a UE according to the present invention. At operation 410, the UE receives, from a network device, 1) one or more sets of configuration information (e.g., information used to select or reselect a cell) and 2) the association information indicating associations between network slices or network slice groups and the multiple sets of the configuration information. For example, the one or more sets of configuration information is for a cell selection or a cell reselection and each of the multiple sets of the configuration information is associated with a corresponding network slice or a corresponding network slice group. At operation 420, the UE performs a cell selection or a cell reselection based on a final configuration information that is one of the multiple sets of the configuration information. Thus, the UE can apply the final configuration information for an intended slice when performing the cell selection or reselection. In some implementations, the final configuration information is selected among the one or more sets of the configuration information by the UE. In some implementations, the final configuration information is a default configuration information or a configuration information set associated with a default network slice or default network slice group. The default configuration information set, the default network slice or the default network slice group are defined in specification or configured by the network device and received by the user device via a SIB1 message, a system information message, a dedicated RRC (radio resource control) message, or a NAS (non-access stratum) signaling.

According to the present invention, the one or more sets of configuration information includes cell reselection priorities and each reselection priority is related to at least one of a frequency or a cell. In some implementations, at least one of the one or more sets of the configuration information includes an identification (ID) of a network slice or a network slice group that is supported by the network device.

In some implementations, the association information is received with a configuration information index identifying a corresponding set of the configuration information and the associated one or more Single Network Slice Selection Assistance Information (S-NSSAIs) identifying one or more network slices or network slice groups. In some implementation examples, the association information is received with a slice index identifying a corresponding network slice or network slice group and the associated one or more sets of configuration information for cell selection and reselection. In some implementation examples, the association information is received with a list of network slice or network slice group supported by the network device and each network slice or network slice group in the list is assigned with an identification.

In some implementations, the one or more sets of the configuration information is included in a first radio resource control (RRC) message or a first NAS (non-access sartum) message and the association information is included in a second RRC message or a second NAS message. In some implementations, the first RRC message and the second RRC message is a system information block 1 (SIB1) message or a system information message or a dedicated RRC message. In some implementation the one or more sets of the configuration and the association information is included in the same RRC message (SIB1, system information message or dedicated RRC message) or the same NAS message.

In some implementations, the operation 410 is performed such that the one or multiple sets of configuration information can be provided via system information (e.g. SIB1/SIB2/SIB4) or dedicated RRC signaling (e.g. RRCRelease message). The association information between slices or slice groups and the one or more sets of the configuration information can be configured via system information or dedicated RRC signaling (e.g. RRCRelease message) or NAS (non-access-stratum) signaling in the following different ways:
Implementation 1: The NW configures one or multiple sets of configuration information and each set of the configuration information is assigned with a configuration information index. For each network slice (identified by a S-NSSAI) or network slice group (identified by a network slice group identifier), the configuration information index is configured to link the network slice or network slice group to the configuration information (e.g. cell reselection priorities) identified by the index.
Implementation 2: The NW provides a list of network slices or network slice groups that are supported within a tracking area or registration area via NAS signaling (e.g. Registration Accept message or Configuration Update Command message). The first slice or slice group in the list is assigned with network slice index 0 or slice group index 0, the second network slice or network slice group in the list is assigned with slice index 1 or slice group index 1, and so on. For each network slice or network slice group index, a set of configuration information (e.g. a set of cell reselection priorities) is configured from the NW to the UE via system information message or dedicated RRC signaling (e.g. RRCRelease message).
Implementation 3: The NW provides a list of network slices or network slice groups that are supported within a tracking area or registration area via NAS signaling (e.g. Registration Accept message or Configuration Update Command message). Each network slice or network slice group in the list is assigned with an identification (ID). For each network slice or network slice group supported by a cell or a frequency, the identification is configured by the gNB and transmitted to the UE via system information or dedicated RRC signaling (e.g. RRCRelease message). The supported network slice identification list or network slice group identification list can be configured per frequency, per cell or per PLMN. UE will receive the list of the supported network slices or network slice groups and only consider cells who support UE's intended slice(s) as a suitable cell.

The one or more sets of configuration information and the association information between the network slice/ network slice group are provided in the same RRC message (e.g. SIB1 message, system information message or RRCRelease message) or different messages. For example, the one or more sets of configuration information are broadcasted in system information while the association information between network slices/network slice groups and the one or more sets of the configuration information is configured via dedicated RRC signaling (e.g. RRCRelease message) or NAS signaling.

In some implementations, an indicator may be configured to indicate that whether the UE is allowed to apply the configuration information associated with the slice or slice group via system information or dedicated RRC signaling or NAS signaling. In this case, the UE starts to apply the configuration information associated with the intended network slice, when the indicator (if configured) shows that the UE is allowed to apply the corresponding configuration information.

In some implementations, a timer may be configured to show the validity time of the association information between the network slices or network slice groups and the one or more sets of the configuration information via system information or dedicated RRC signaling.

For the case when the UE supports more than one slice and is provided with associated configuration information for each supported slice, the following handling can be considered:
Implementation 1: The NW configures one default network slice/slice group or a default set of configuration information via system information or dedicated RRC signaling. When the UE supports more than one network slices with associated configuration information, the UE may apply the default set of configuration information or the configuration infomation associated with the default network slice/network slice group.
Implementation 2: The UE selects one from the supported network slices or network slice groups and apply the associated configuration information.
Implementation 3: A default network slice/network slice group or a default set of configuration information set (e.g. the first slice/slice group or the first set of configuration information configured via system information or dedicated RRC signaling) is defined according to a relevant specification. The UE will apply the default set of configuration information or the configuration information associated with the default network slice/network slice group.

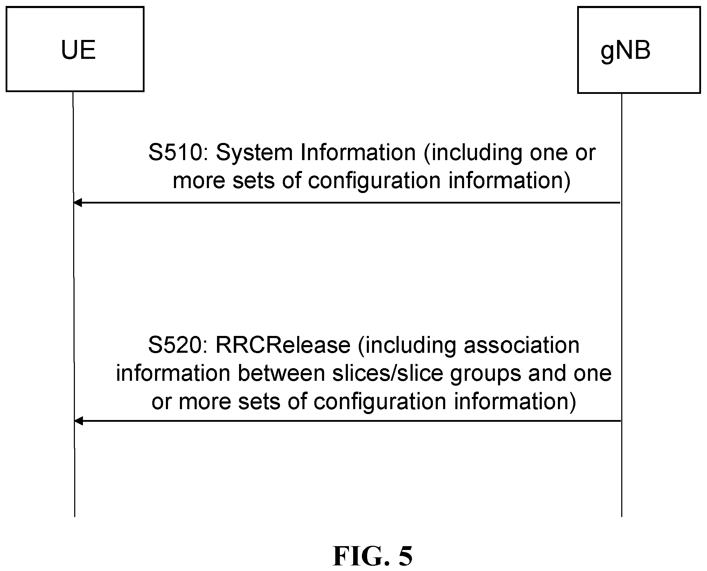

FIG. 5 shows an example of a flowchart showing operations between a UE and a NW based on some implementations of the disclosed technology. The network device may correspond to a gNB node. The example as shown in FIG. 5 illustrates that the UE receives, at step 510, system information (e.g. SIB2 or SIB4) including one or more alternative cell reselection priority sets in addition to the existing reselection priority. The cell reselection priority sets are communicated as an example of the configuration information sets. Then, at step 520, the UE receives RRCRelease message including the association information between network slices/network slice groups and the reselection information sets. In some implementations, the RRCRelease message may include reselection information index (corresponding to the configuration information index as described above) and further include an indicator indicating that UE is allowed to apply the reselection information associated with the slice and a validity timer for the association. UE can start to apply the reselection priority set associated with the intended slice if the indicator is set to "true".

An example of the alternative cell reselection priority sets broadcasting in SIB2 is given below. The parts related to the broadcasting of the cell reselection priority sets are shown in bold and Italic.

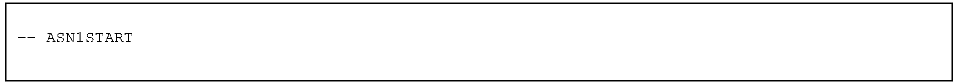

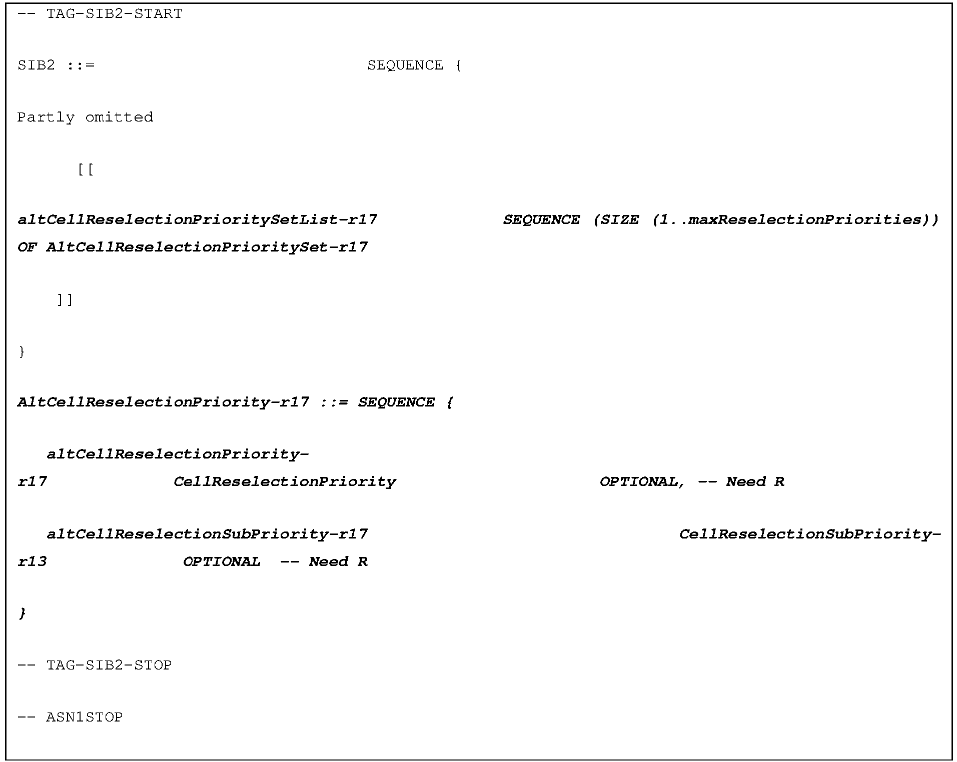

An example of the alternative cell reselection priority sets broadcasting in SIB4 is given below. The parts related to the broadcasting of the cell reselection priority sets are shown in bold and Italic.

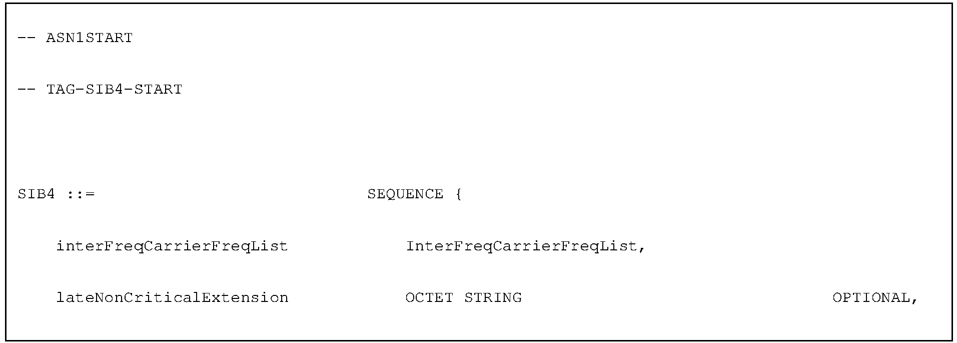

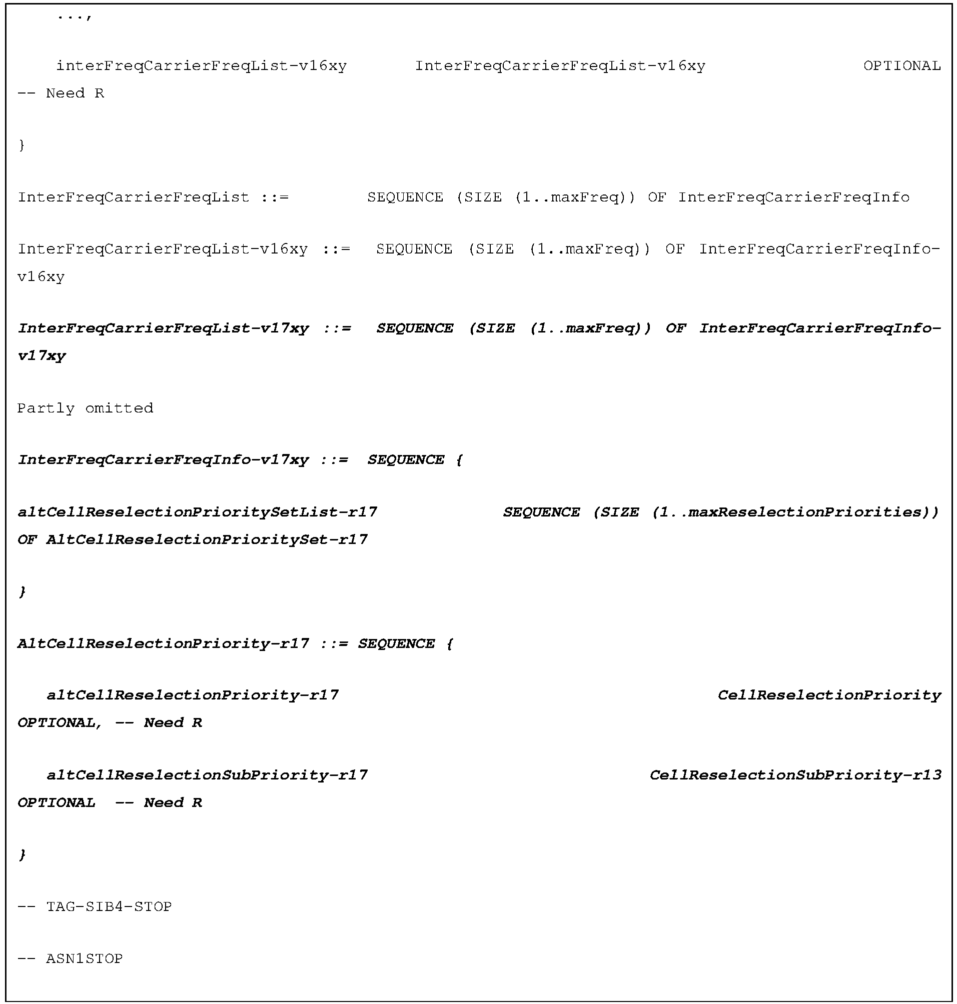

The below shows examples showing the association information between slices/slice groups and reselection priority sets, an indicator showing the applicability of the slice associated reselection priority set, and the validity timer.

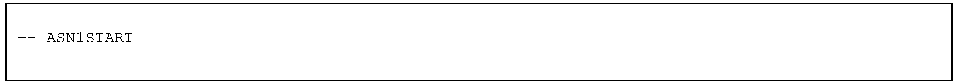

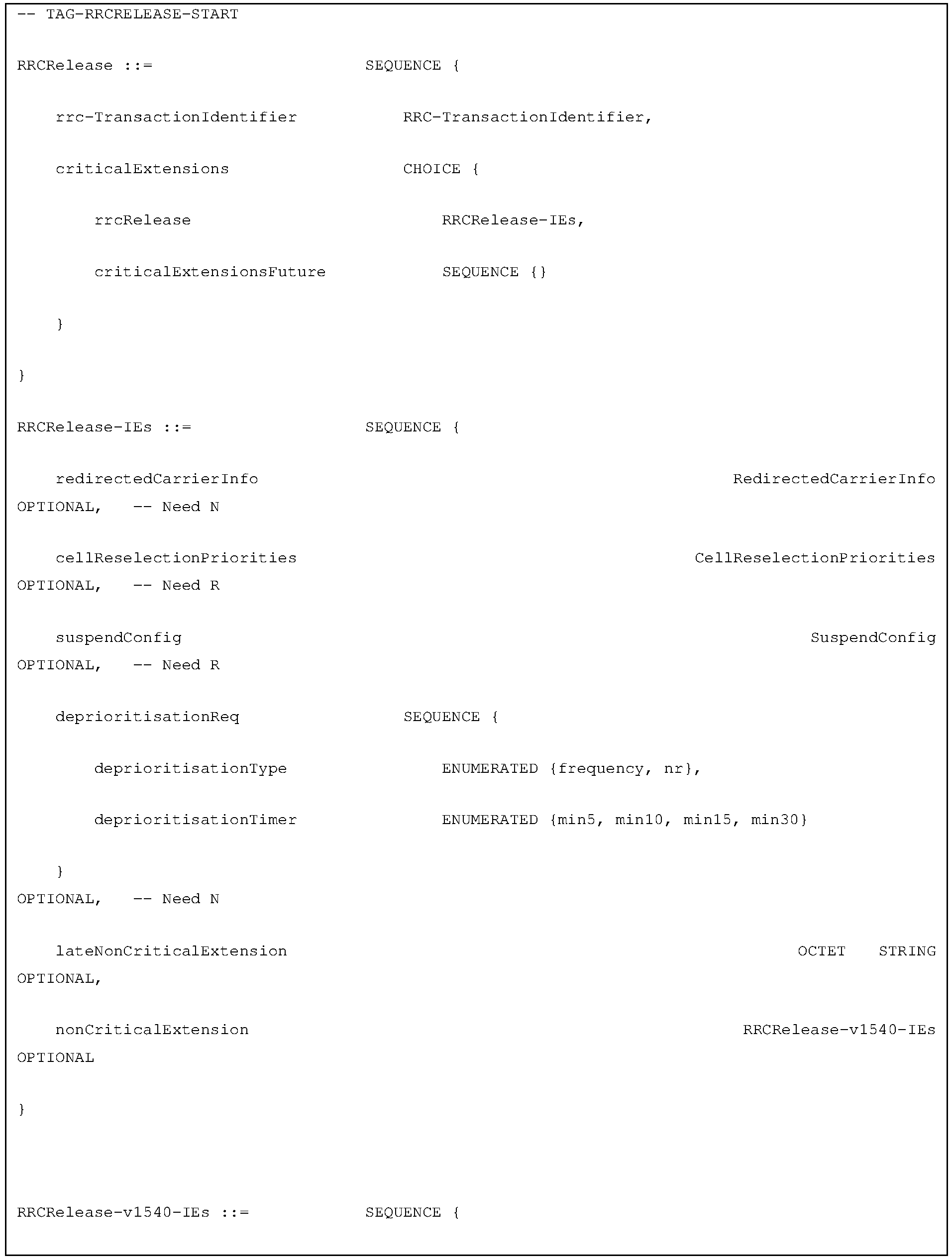

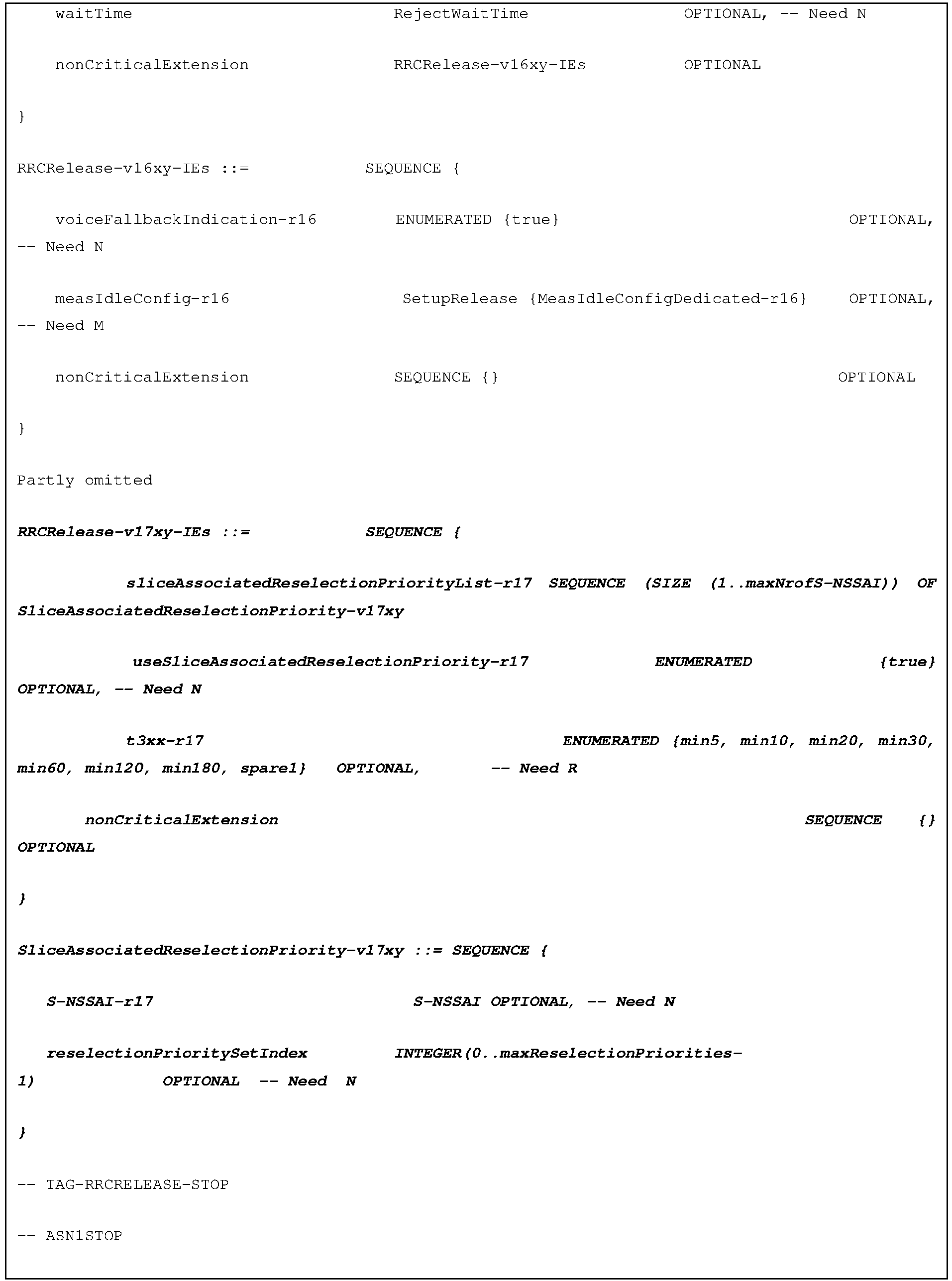

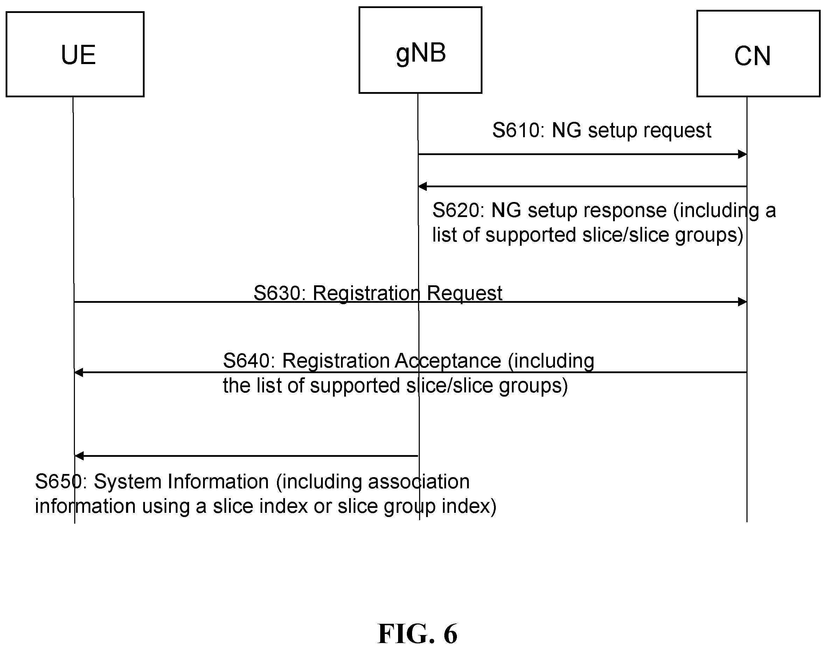

FIG. 6 shows an example of a flowchart showing operations between a UE, a gNB node, and a core network, CN based on some implementations of the disclosed technology. At step 610, the gNB node sends the NG setup request to the CN to exchange data needed for a future communication. At step 620, the gNB node receives the NG response including a list of network slices or network slice groups that are supported by the core network. At step 630, the UE sends the registration request (e.g. with the registration type "initial registration") to CN. At step 640, the CN sends to the UE the registration acceptance message including the list of supported network slices/network slice groups within the registration area. Considering that a registration area may cover more than one tracking area, the supported network slices/network slice groups within the registration area can be provided per tracking area or per registration area. Each network slice or network slice group in the list is assigned with a slice index or slice group index following the order of the network slices or network slice groups in the list. For example, the first network slice in the list is assigned with slice index 0, the second network slice in the list is assigned with slice index 1, and so on. At step 650, the UE receives system information (e.g. SIB2 or SIB4) in which reselection information (e.g. cell reselection priorities per cell or per frequency) is configured for each network slice index.

An example of the alternative cell reselection priority sets broadcasting in SIB2 is given below. The parts related to the broadcasting of the cell reselection priority sets are shown in bold and Italic.

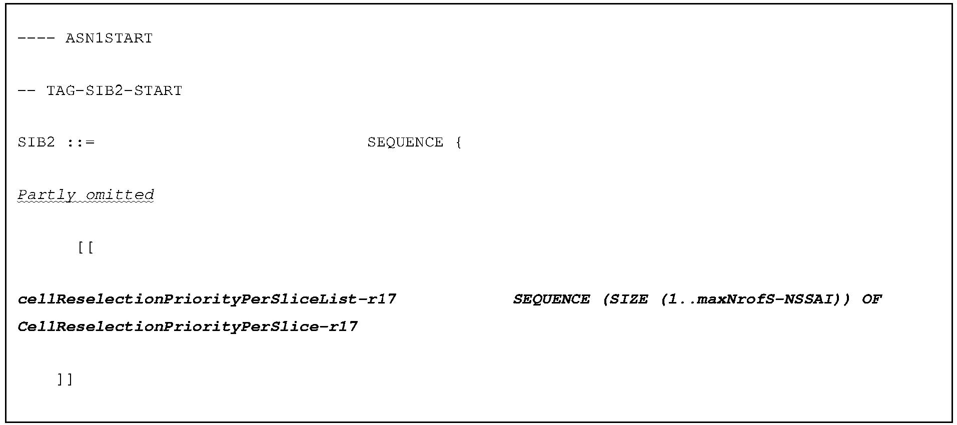

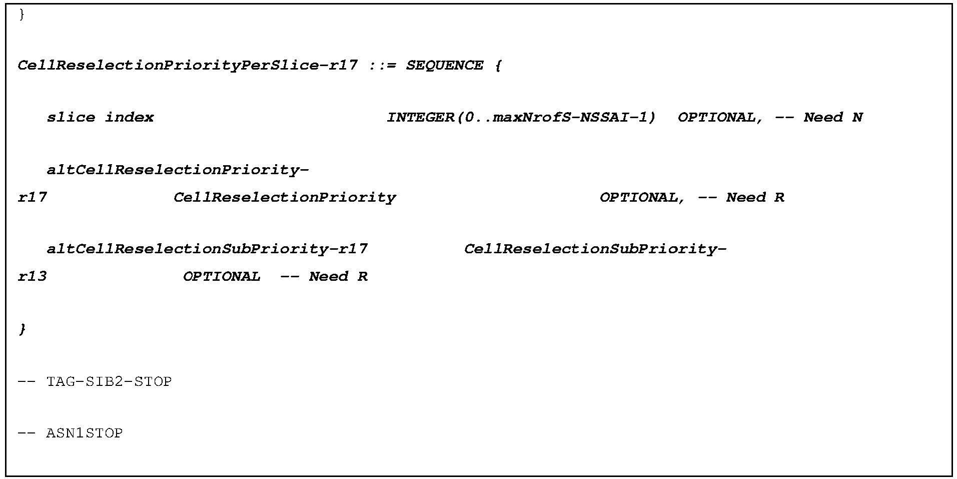

An example of the alternative cell reselection priority sets broadcasting in SIB4 is given below. The parts related to the broadcasting of the cell reselection priority sets are shown in bold and Italic.

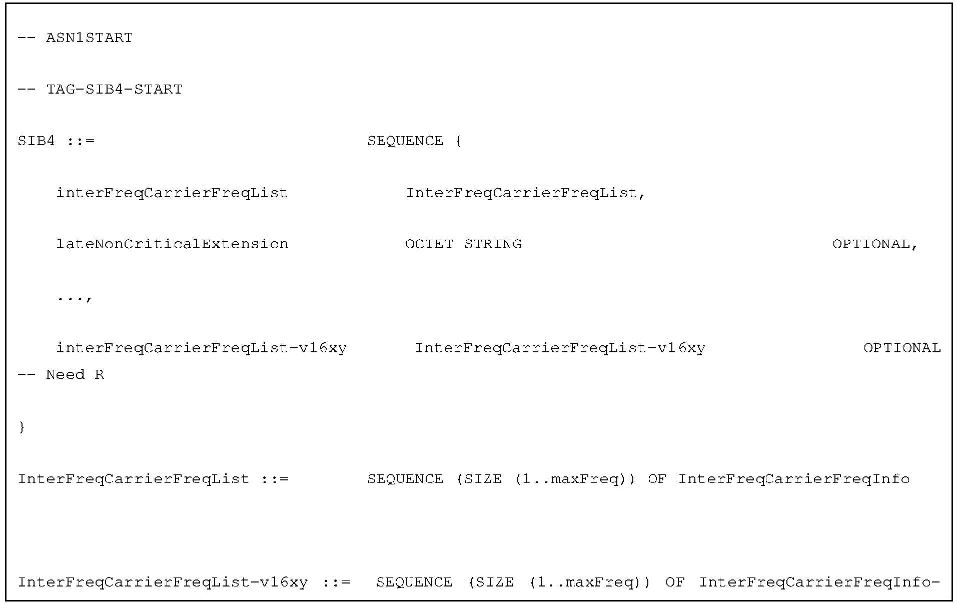

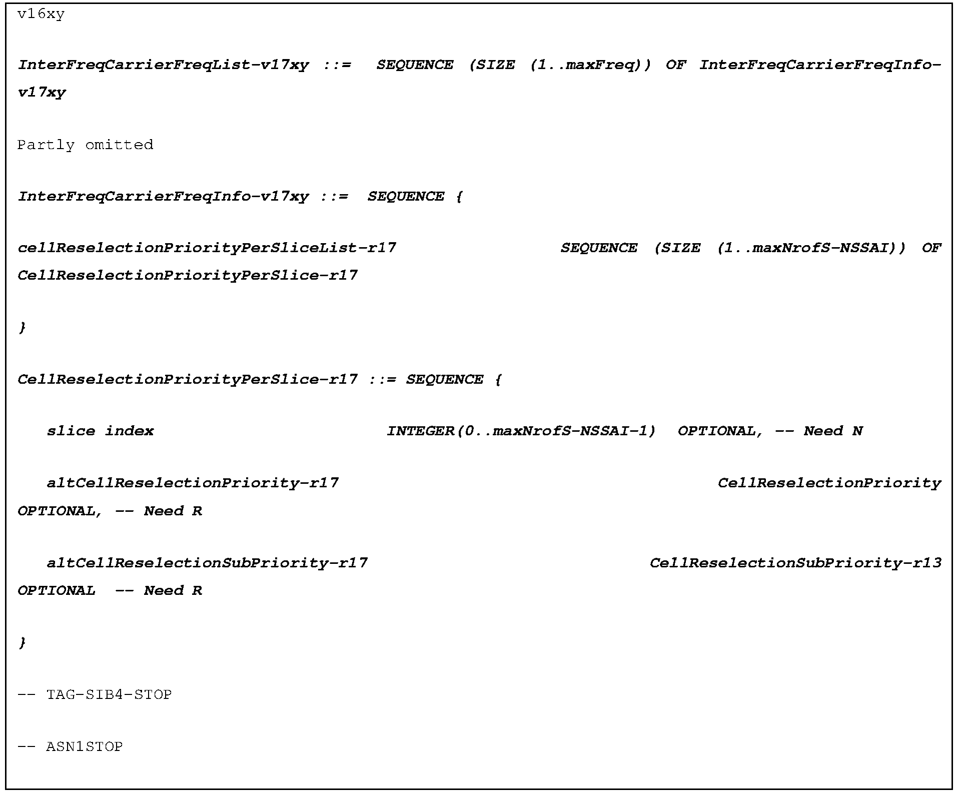

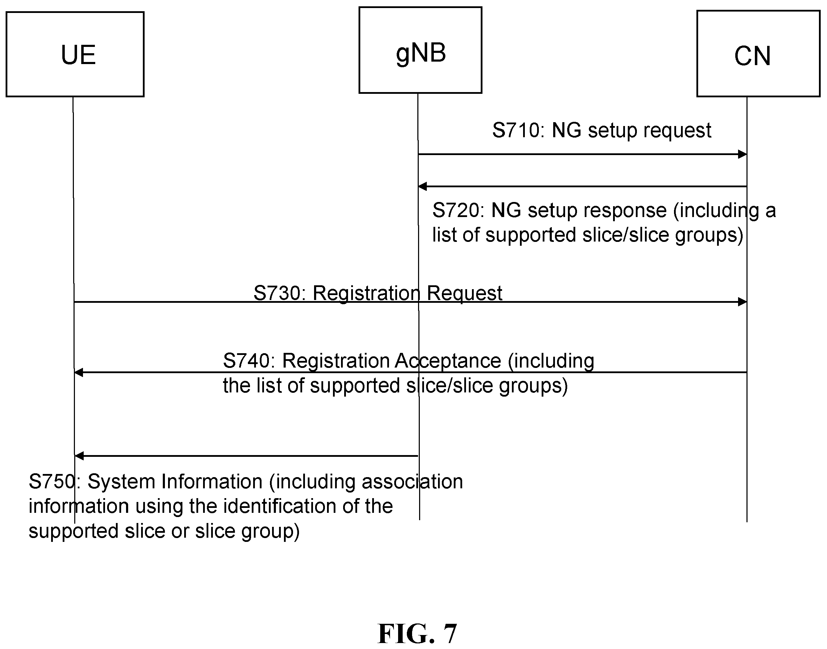

FIG. 7 shows an example of a flowchart showing operations between a UE, a gNB node, and a core network, CN based on some implementations of the disclosed technology. At step 710, the gNB node sends the NG setup request to the CN to exchange data needed for a future communication. At step 720, the gNB node receives the NG response including a list of network slices or network slice groups that are supported by the core network. At step 730, the UE sends the registration request (e.g. with the registration type "initial registration") to CN. At step 740, the CN sends to the UE the registration acceptance message including the list of supported network slices/network slice groups within the registration area. Each network slice or network slice group in the list is assigned with a slice identification or slice group identification. Considering that a registration area may cover more than one tracking area, the supported network slices/network slice groups within the registration area can be provided per tracking area or per registration area. The supported network slices/network slice groups within the registration area may also be provided per PLMN. At step 750, the UE receives system information (e.g. SIB1) in which the identifications of the supported network slice or network slice group by a cell or a frequency is configured. The supported network slice or network slice group identification for a cell or a frequency may also be configured per PLMN. UE will then take the supported network slice or network slice group of a cell or frequency into consideration and only consider cells who support UE's intended slice(s) as a suitable cell.

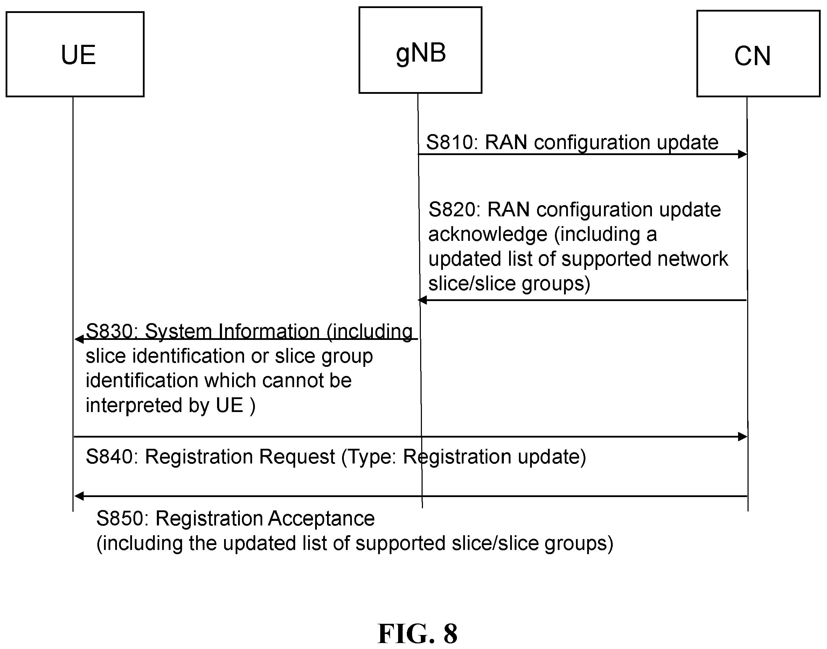

FIG. 8 shows an example of a flowchart showing operations between a UE, a gNB node, and a corenetwork, CN based on some implementations of the disclosed technology. At step 810, the gNB node sends the RAN configuration update message to the CN to update the supported network slice list or the network slice group list (e.g. to add one or more new network slices or slice groups into the list). At step 820, the gNB node receives the RAN configuration update acknowledge message including a updated list of network slices or network slice groups that are supported by both the RAN node and the core network. At step 830, the gNB broadcast the supported network slice identifications or network slice group identifications to UE. At step 840, if there is any network slice identifications or network slice group identifications UE cannot interpret, UE will transmit registration request message to CN with the registration type registration update, in which the broadcast network slice identification or slice group identification is also included. At step 850, the CN will send back a registration accept message including an updated list of supported network slice or slice groups and the associated identifications. UE can then be able to interpret the network slice identification or the slice group identification into a certain network slice or slice group and take the supported network slice or network slice group of a cell or frequency into consideration and only consider cells who support UE's intended slice(s) as a suitable cell.

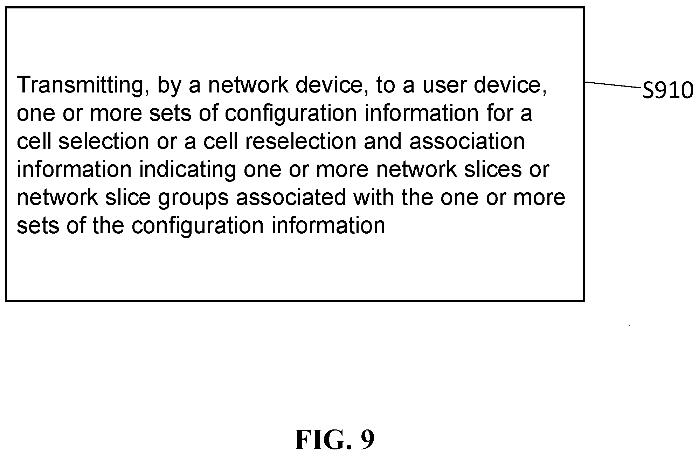

FIG. 9 shows an example of a flowchart showing operations of a network device based on some implementations of the disclosed technology. At 910, the network device transmits, to a user device, one or more sets of configuration information for a cell selection or a cell reselection and association information indicating one or more network slices or network slice groups associated with the one or more sets of the configuration information

It is intended that the specification, together with the drawings, be considered exemplary only, where exemplary means an example and, unless otherwise stated, does not imply an ideal or a preferred embodiment. As used herein, the use of "or" is intended to include "and/or", unless the context clearly indicates otherwise.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described and other implementations, enhancements and variations can be made based on what is described and illustrated in this

## Claims

1. A wireless communication method, comprising:
receiving (410), by a user device (211, 212, 213), from a network device (220), a first message including one or more sets of configuration information for a cell selection or a cell reselection, wherein the one or more sets of configuration information include cell reselection priorities;
receiving, by the user device (211, 212, 213), a second message including association information indicating one or more network slices or network slice groups that are associated with the one or more sets of configuration information, wherein the association information includes a list of network slices or network slice groups that are supported by the network device (220), each network slice or each network slice group in the list being assigned with a corresponding identification; and
performing (420), by the user device (211, 212, 213), the cell selection or the cell reselection based on a final configuration information that is one of the one or more sets of configuration information.

2. The wireless communication method of claim 1, wherein the final configuration information is selected based on an implementation of the user device (211, 212, 213), or
wherein the final configuration information is a default configuration information or a configuration information set associated with a default network slice or a default network slice group,
wherein the default configuration information, the default network slice or the default network slice group are defined in a specification or configured by the network device (220) and received by the user device (211, 212, 213) via a SIB1, system information block 1, message, a system information message, a dedicated RRC, radio resource control, message, or a NAS, non-access stratum, message.

3. The wireless communication method of claim 1, wherein the first message corresponds to a first radio resource control, RRC, message or a first NAS, non-access stratum, message and the second message corresponds to a second RRC message or a second NAS message,
wherein each of the first RRC message and the second RRC message is a system information message or a dedicated RRC message, or
wherein the first message and the second message are a same RRC message, a same system information message, or a same NAS message.

4. The wireless communication method of claim 1, further comprising:
receiving, by the user device (211, 212, 213), an indication whether the one or more sets of configuration information are available for use in the user device (211, 212, 213).

5. The wireless communication method of claim 1, wherein the association information further indicates time information how long associations between the one or more network slices or network slice groups and the one or more sets of configuration information are to be valid.

6. The wireless communication method of claim 1, wherein the association information further includes at least one of i) a configuration information index identifying a corresponding set of configuration information and one or more S-NSSAI, Single Network Slice Selection Assistance Information, identifying one or more network slices or network slice groups, or
ii) a slice index identifying a corresponding network slice or network slice group and the one or more sets of configuration information for the cell selection and the cell reselection.

7. A wireless communication method, comprising:
transmitting, by a network device (220), to a core network device, a resource set up request to set up resources for a communication;
receiving, from the core network device, a resource setup response including a list of network slices or network slice groups that are supported by the core network device;
transmitting, by the network device (220), to a user device (211, 212, 213), a first message including one or more sets of configuration information for a cell selection or a cell reselection, wherein the one or more sets of configuration information include cell reselection priorities;
transmitting, by the network device (220), to the user device (211, 212, 213), a second message including association information indicating one or more network slices or network slice groups that are associated with the one or more sets of configuration information, wherein the association information includes a list of network slices or network slice groups that are supported by the network device (220), each network slice or each network slice group in the list being assigned with a corresponding identification.

8. The wireless communication method of claim 7, further comprising: receiving, from the core network device, an updated list of network slices or network slice groups in response to an update request from the network device (220) to the core network device.

9. The wireless communication method of claim 7, wherein the one or more sets of configuration information includes a default configuration information or configuration information set associated with a default network slice or a default network slice group, and wherein the default configuration information, the default network slice or the default network slice group is defined in a specification or configured by the network device (220) and transmitted to the user device (211, 212, 213) via a SIB1, system information block 1, message, a system information message, a dedicated RRC, radio resource control, message, or a NAS, non-access stratum, message.

10. The wireless communication method of claim 7,
wherein in the first message corresponds to a first radio resource control, RRC, message or a first NAS, non-access stratum, message and in the second message corresponds to a second RRC message or a second NAS message,
wherein each of the first message and the second message is a system information message or a dedicated RRC message, or
wherein the first message and the second message are a same RRC message, a same system information message, or a same NAS message.

11. The wireless communication method of claim 7, wherein the association information further indicates time information how long associations between the one or more network slices or network slice groups and the one or more sets of configuration information are to be valid.

12. The wireless communication method of claim 7, wherein the association information further includes at least one of i) a configuration information index identifying a corresponding set of configuration information and one or more S-NSSAI, Single Network Slice Selection Assistance Information, identifying one or more network slices or network slice groups, or
ii) a slice index identifying a corresponding network slice or network slice group and the one or more sets of configuration information for the cell selection and the cell reselection.

13. The wireless communication method of claim 7, further comprising:
transmitting, by the network device (220), an indication whether the one or more sets of configuration information are available for use in the user device (211, 212, 213).

14. A communication apparatus (310) comprising a processor (320) configured to implement a method recited in any one or more of claims 1 to 6 or claims 7 to 13.

## Patentansprüche

1. Drahtloses Kommunikationsverfahren, das aufweist:
Empfangen (410) durch eine Benutzervorrichtung (211, 212, 213) von einer Netzwerkvorrichtung (220), einer ersten Nachricht, die einen oder mehrere Sätze von Konfigurationsinformationen für eine Zellenauswahl oder eine Zellenneuauswahl enthält, wobei die eine oder mehreren Sätze von Konfigurationsinformationen ZellenneuauswahlPrioritäten umfassen;
Empfangen durch die Benutzervorrichtung (211, 212, 213) einer zweiten Nachricht, die Assoziationsinformationen enthält, die eine oder mehrere Netzwerk-Slices oder Netzwerk-Slice-Gruppen anzeigen, die mit dem einen oder den mehreren Sätzen von Konfigurationsinformationen assoziiert sind, wobei die Assoziationsinformationen eine Liste von Netzwerk-Slices oder Netzwerk-Slice-Gruppen umfassen, die von der Netzwerkvorrichtung (220) unterstützt werden, wobei jeder Netzwerk-Slice oder jeder Netzwerk-Slice-Gruppe in der Liste eine entsprechende Identifikation zugewiesen ist; und
Durchführen (420) durch die Benutzervorrichtung (211, 212, 213) der Zellenauswahl oder der Zellenneuauswahl basierend auf endgültigen Konfigurationsinformationen, die eine der einen oder mehreren Sätze von Konfigurationsinformationen ist.

2. Drahtloses Kommunikationsverfahren nach Anspruch 1, wobei die endgültigen Konfigurationsinformationen basierend auf einer Implementierung der Benutzervorrichtung (211, 212, 213) ausgewählt werden oder wobei die endgültigen Konfigurationsinformationen Vorgabe-Konfigurationsinformationen oder Konfigurationsinformationen sind, die mit einem Vorgabe-Netzwerk-Slice oder einer Vorgabe-Netzwerk-Slice-Gruppe assoziiert sind, wobei die Vorgabe-Konfigurationsinformationen, der Vorgabe-Netzwerk-Slice oder die Vorgabe-Netzwerk-Slice-Gruppe in einer Spezifikation definiert oder durch die Netzwerkvorrichtung (220) konfiguriert sind und von der Benutzervorrichtung (211, 212, 213) über eine SIB1, Systeminformationsblock 1, Nachricht, eine Systeminformationsnachricht, eine dedizierte RRC, Funkressourcensteuerung, Nachricht oder eine NAS, Non-Access-Stratum, Nachricht empfangen werden.

3. Drahtloses Kommunikationsverfahren nach Anspruch 1, wobei die erste Nachricht einer ersten Funkressourcensteuerung, RRC, Nachricht oder einer ersten NAS, Non-Access Stratum, Nachricht entspricht und die zweite Nachricht einer zweiten RRC-Nachricht oder einer zweiten NAS-Nachricht entspricht,
wobei jede der ersten RRC-Nachricht und der zweiten RRC-Nachricht eine Systeminformationsnachricht oder eine dedizierte RRC-Nachricht ist, oder
wobei die erste Nachricht und die zweite Nachricht eine gleiche RRC-Nachricht, eine gleiche Systeminformationsnachricht oder eine gleiche NAS-Nachricht sind.

4. Drahtloses Kommunikationsverfahren nach Anspruch 1, das ferner aufweist:
Empfangen durch die Benutzervorrichtung (211, 212, 213) einer Anzeige, ob der eine oder die mehreren Sätze von Konfigurationsinformationen zur Verwendung in dem Benutzervorrichtung (211, 212, 213) verfügbar sind.

5. Drahtloses Kommunikationsverfahren nach Anspruch 1, wobei die Assoziationsinformationen ferner Zeitinformationen anzeigen, wie lange Assoziationen zwischen den einen oder mehreren Netzwerk-Slices oder Netzwerk-Slice-Gruppen und dem einen oder den mehreren Sätzen von Konfigurationsinformationen gültig sein sollen.

6. Drahtloses Kommunikationsverfahren nach Anspruch 1, wobei die Assoziationsinformationen ferner mindestens eines aufweisen von:
i) einem Konfigurationsinformationsindex, der einen entsprechenden Satz von Konfigurationsinformationen und eine oder mehrere S-NSSAI, Single Network Slice Selection Assistance Informationen, identifiziert, die eine oder mehrere Netzwerk-Slices oder Netzwerk-Slice-Gruppen identifizieren, oder
ii) einen Slice-Index, der einen entsprechenden Netzwerk-Slice oder eine entsprechende Netzwerk-Slice-Gruppe und den einen oder die mehreren Sätze von Konfigurationsinformationen für die Zellenauswahl und die Zellenneuauswahl identifiziert.

7. Drahtloses Kommunikationsverfahren, das aufweist:
Senden durch eine Netzwerkvorrichtung (220) einer Ressourceneinrichtungsanforderung zur Einrichtung von Ressourcen für eine Kommunikation an eine Kernnetzwerkvorrichtung;
Empfangen von der Kernnetzwerkvorrichtung einer Ressourceneinrichtungsantwort, die eine Liste von Netzwerk-Slices oder Netzwerk-Slice-Gruppen aufweist, die von der Kernnetzwerkvorrichtung unterstützt werden;
Senden von der Netzwerkvorrichtung (220) an eine Benutzervorrichtung (211, 212, 213) einer ersten Nachricht, die einen oder mehrere Sätze von Konfigurationsinformationen für eine Zellenauswahl oder eine Zellenneuauswahl aufweist, wobei die eine oder mehreren Sätze von Konfigurationsinformationen Zellenneuauswahlprioritäten umfassen;
Senden von der Netzwerkvorrichtung (220) an die Benutzervorrichtung (211, 212, 213) einer zweiten Nachricht, die Assoziationsinformationen enthält, die eine oder mehrere Netzwerk-Slices oder Netzwerk-Slice-Gruppen anzeigen, die mit dem einen oder mehreren Sätzen von Konfigurationsinformationen assoziiert sind, wobei die Assoziationsinformationen eine Liste von Netzwerk-Slices oder Netzwerk-Slice-Gruppen enthalten, die von der Netzwerkvorrichtung (220) unterstützt werden, wobei jeder Netzwerk-Slice oder jeder Netzwerk-Slice-Gruppe in der Liste eine entsprechende Identifikation zugewiesen ist.

8. Drahtloses Kommunikationsverfahren nach Anspruch 7, das ferner aufweist: Empfangen von der Kernnetzwerkvorrichtung einer aktualisierten Liste von Netzwerk-Slices oder Netzwerk-Slice-Gruppen als Reaktion auf eine Aktualisierungsanforderung von der Netzwerkvorrichtung (220) an die Kernnetzwerkvorrichtung.

9. Drahtloses Kommunikationsverfahren nach Anspruch 7, wobei der eine oder die mehreren Sätze von Konfigurationsinformationen Vorgabe-Konfigurationsinformationen oder einen Vorgabe-Konfigurationsinformationssatz aufweisen, der einer Vorgabe-Netzwerk-Slice oder einer Vorgabe-Netzwerk-Slice-Gruppe zugeordnet ist, und wobei die Vorgabe-Konfigurationsinformationen, die Vorgabe-Netzwerk-Slice oder die Vorgabe-Netzwerk-Slice-Gruppe in einer Spezifikation definiert oder durch die Netzwerkvorrichtung (220) konfiguriert und an die Benutzervorrichtung (211, 212, 213) über eine SIB1, Systeminformationsblock 1, Nachricht, eine Systeminformationsnachricht, eine dedizierte RRC, Funkressourcensteuerung, Nachricht oder eine NAS, Non-Access-Stratum, Nachricht, übertragen werden.

10. Drahtloses Kommunikationsverfahren nach Anspruch 7, wobei die erste Nachricht einer ersten Funkressourcensteuerung, RRC, Nachricht oder einer ersten NAS, Non-Access-Stratum, Nachricht entspricht und in der zweiten Nachricht einer zweiten RRC-Nachricht oder einer zweiten NAS-Nachricht entspricht,
wobei die erste Nachricht und die zweite Nachricht jeweils eine Systeminformationsnachricht oder eine dedizierte RRC-Nachricht sind, oder
wobei die erste Nachricht und die zweite Nachricht eine gleiche RRC-Nachricht, eine gleiche Systeminformationsnachricht oder eine gleiche NAS-Nachricht sind.

11. Drahtloses Kommunikationsverfahren nach Anspruch 7, wobei die Assoziationsinformationen ferner Zeitinformationen anzeigen, wie lange Assoziationen zwischen den einen oder mehreren Netzwerk-Slices oder Netzwerk-Slice-Gruppen und dem einen oder den mehreren Sätzen von Konfigurationsinformationen gültig sein sollen.

12. Drahtloses Kommunikationsverfahren nach Anspruch 7, wobei die Assoziationsinformationen ferner mindestens eines aufweisen von:
i) einem Konfigurationsinformationsindex, der einen entsprechenden Satz von Konfigurationsinformationen und eine oder mehrere S-NSSAI, Single Network Slice Selection Assistance Informationen, identifiziert, die eine oder mehrere Netzwerk-Slices oder Netzwerk-Slice-Gruppen identifizieren, oder
ii) einen Slice-Index, der einen entsprechenden Netzwerk-Slice oder eine entsprechende Netzwerk-Slice-Gruppe und den einen oder die mehreren Sätze von Konfigurationsinformationen für die Zellenauswahl und die Zellenneuauswahl identifiziert.

13. Drahtloses Kommunikationsverfahren nach Anspruch 7, das ferner aufweist:
Senden durch die Netzwerkvorrichtung (220) einer Anzeige, ob der eine oder die mehreren Sätze von Konfigurationsinformationen zur Verwendung in der BenutzerVorrichtung (211, 212, 213) verfügbar sind.

14. Kommunikationsvorrichtung (310), die einen Prozessor (320) aufweist, der konfiguriert ist, ein Verfahren nach einem oder mehreren der Ansprüche 1 bis 6 oder der Ansprüche 7 bis 13 zu implementieren.

## Revendications

1. Procédé de communication sans fil, comprenant :
la réception (410), par un dispositif utilisateur (211, 212, 213), en provenance d'un dispositif de réseau (220), d'un premier message comprenant un ou plusieurs ensembles d'informations de configuration pour une sélection de cellule ou une re-sélection de cellule, le ou les ensembles d'informations de configuration présentant des priorités de re-sélection de cellule ;
la réception, par le dispositif utilisateur (211, 212, 213), d'un deuxième message comprenant des informations d'association indiquant une ou plusieurs tranches de réseau ou groupes de tranches de réseau associés à l'ensemble, ou aux ensembles d'informations de configuration, les informations d'association comprenant une liste de tranches de réseau ou de groupes de tranches de réseau assistés par le dispositif de réseau (220), chaque tranche de réseau ou chaque groupe de tranches de réseau de la liste étant attribué à une identification correspondante ; et
l'exécution (420), par le dispositif utilisateur (211, 212, 213), de la sélection de cellule ou de la re-sélection de cellule sur la base d'informations de configuration finales qui sont un ensemble parmi le ou les ensembles d'informations de configuration.

2. Procédé de communication sans fil selon la revendication 1, où les informations de configuration finale sont sélectionnées sur la base d'une implémentation du dispositif utilisateur (211, 212, 213), ou
où les informations de configuration finale sont des informations de configuration par défaut ou un ensemble d'informations de configuration associé à une tranche de réseau par défaut ou à un groupe de tranches de réseau par défaut,
où les informations de configuration par défaut, la tranche de réseau par défaut ou le groupe de tranches de réseau par défaut sont définis dans une spécification ou configurés par le dispositif de réseau (220) et reçus par le dispositif utilisateur (211, 212, 213) via un message de bloc d'informations système 1, SIB1, un message d'informations système, un message de commande de ressources radio, RRC, dédié, ou un message de NAS, strate de non-accès.

3. Procédé de communication sans fil selon la revendication 1, où le premier message correspond à un premier message de commande de ressources radio, RRC, ou à un premier message de strate de non-accès, NAS, et le deuxième message correspond à un deuxième message RRC ou à un deuxième message NAS,
où le premier message RRC et le deuxième message RRC sont chacun un message d'informations système ou un message RRC dédié, ou
où le premier message et le deuxième message sont un même message RRC, un même message d'informations système ou un même message NAS.

4. Procédé de communication sans fil selon la revendication 1, comprenant en outre :
la réception, par le dispositif utilisateur (211, 212, 213), d'une indication si le ou les ensembles d'informations de configuration sont disponibles pour utilisation dans le dispositif utilisateur (211, 212, 213).

5. Procédé de communication sans fil selon la revendication 1, où les informations d'association indiquent en outre des informations temporelles sur la durée pendant laquelle les associations entre la ou les tranches de réseau ou groupes de tranches de réseau et le ou les ensembles d'informations de configuration doivent être valides.

6. Procédé de communication sans fil selon la revendication 1, où les informations d'association comprennent en outre
i) un indice d'informations de configuration identifiant un ensemble correspondant d'informations de configuration et une ou plusieurs informations d'assistance à la sélection d'une tranche de réseau unique, S-NSSAI, identifiant une ou plusieurs tranches de réseau ou groupes de tranches de réseau, et/ou
ii) un indice de tranche identifiant une tranche de réseau ou un groupe de tranches de réseau correspondant et le ou les ensembles d'informations de configuration pour la sélection de cellule et la re-sélection de cellule.

7. Procédé de communication sans fil, comprenant :
la transmission, par un dispositif de réseau (220), à un dispositif de réseau central, d'une demande de configuration de ressources afin de configurer des ressources pour une communication ;
la réception, en provenance du dispositif de réseau central, d'une réponse de configuration de ressources comprenant une liste de tranches de réseau ou de groupes de tranches de réseau assistés par le dispositif de réseau central ;
la transmission, par le dispositif de réseau (220), à un dispositif utilisateur (211, 212, 213), d'un premier message comprenant un ou plusieurs ensembles d'informations de configuration pour une sélection de cellule ou une re-sélection de cellule, le ou les ensembles d'informations de configuration présentant des priorités de re-sélection de cellule ;
la transmission, par le dispositif de réseau (220), au dispositif utilisateur (211, 212, 213), d'un deuxième message comprenant des informations d'association indiquant une ou plusieurs tranches de réseau ou groupes de tranches de réseau associés à l'ensemble, ou aux ensembles d'informations de configuration, les informations d'association comprenant une liste de tranches de réseau ou de groupes de tranches de réseau assistés par le dispositif de réseau (220), chaque tranche de réseau ou chaque groupe de tranches de réseau de la liste étant attribué à une identification correspondante.

8. Procédé de communication sans fil selon la revendication 7, comprenant en outre : la réception, en provenance du dispositif de réseau central, d'une liste mise à jour de tranches de réseau ou de groupes de tranches de réseau en réponse à une demande de mise à jour du dispositif de réseau (220) au dispositif de réseau central.

9. Procédé de communication sans fil selon la revendication 7, où le ou les ensembles d'informations de configuration comprennent des informations de configuration par défaut ou un ensemble d'informations de configuration associé à une tranche de réseau par défaut ou à un groupe de tranches de réseau par défaut, et où les informations de configuration par défaut, la tranche de réseau par défaut ou le groupe de tranches de réseau par défaut sont définis dans une spécification ou configurés par le dispositif de réseau (220) et transmis au dispositif utilisateur (211, 212, 213) via un message de bloc d'informations système 1, SIB1, un message d'informations système, un message de commande de ressources radio, RRC, dédié, ou un message de NAS, strate de non-accès.

10. Procédé de communication sans fil selon la revendication 7, où le premier message correspond à un premier message de commande de ressources radio, RRC, ou à un premier message de strate de non-accès, NAS, et le deuxième message correspond à un deuxième message RRC ou à un deuxième message NAS,
où le premier message et le deuxième message sont chacun un message d'informations système ou un message RRC dédié, ou
où le premier message et le deuxième message sont un même message RRC, un même message d'informations système ou un même message NAS.

11. Procédé de communication sans fil selon la revendication 7, où les informations d'association indiquent en outre des informations temporelles sur la durée pendant laquelle les associations entre la ou les tranches de réseau ou groupes de tranches de réseau et le ou les ensembles d'informations de configuration doivent être valides.

12. Procédé de communication sans fil selon la revendication 7, où les informations d'association comprennent en outre
i) un indice d'informations de configuration identifiant un ensemble correspondant d'informations de configuration et une ou plusieurs informations d'assistance à la sélection d'une tranche de réseau unique, S-NSSAI, identifiant une ou plusieurs tranches de réseau ou groupes de tranches de réseau, et/ou
ii) un indice de tranche identifiant une tranche de réseau ou un groupe de tranches de réseau correspondant et le ou les ensembles d'informations de configuration pour la sélection de cellule et la re-sélection de cellule.

13. Procédé de communication sans fil selon la revendication 7, comprenant en outre :
la transmission, par le dispositif de réseau (220), d'une indication si le ou les ensembles d'informations de configuration sont disponibles pour utilisation dans le dispositif utilisateur (211, 212, 213).

14. Appareil de communication (310) comprenant un processeur (320) configuré pour mettre en œuvre un procédé selon l'une des revendications 1 à 6 ou 7 à 13.
